# Europäisches Patentamt

(19) **European Patent Office**

**Office européen des brevets**

(11) Veröffentlichungsnummer: **0 173 089 B1**

(12) **EUROPÄISCHE PATENTSCHRIFT**

(45) Veröffentlichungstag der Patentschrift:
**23.11.88**

(51) Int. Cl.⁴: **F 16 H 23/10, B 30 B 1/26**

(21) Anmeldenummer: **85109449.0**

(22) Anmeldetag: **27.07.85**

(54) **Mechanische Presse.**

(30) Priorität: **18.08.84 DE 3430514**

(43) Veröffentlichungstag der Anmeldung:
**05.03.86 Patentblatt 86/10**

(45) Bekanntmachung des Hinweises auf die Patenterteilung:
**23.11.88 Patentblatt 88/47**

(84) Benannte Vertragsstaaten:
**AT BE CH DE FR GB IT LI NL SE**

(56) Entgegenhaltungen:
**DE-B-2 452 577**
**DE-C-311 930**

(73) Patentinhaber: **Wanzke, Manfred, Am Sportfeld 3, D-8751 Niedernberg (DE)**

(72) Erfinder: **Wanzke, Manfred, Am Sportfeld 3, D-8751 Niedernberg (DE)**

(74) Vertreter: **Pöhner, Wilfried Anton, Dr., Kaiserstrasse 27 Postfach 63 23, D-8700 Würzburg 1 (DE)**

LIBER, STOCKHOLM 1988

### Beschreibung

Die Erfindung betrifft eine mechanische Presse gemäß dem Oberbegriff des Anspruches 1.

Eine derartige Vorrichtung ist aus der DE-PS-311 930 bereits bekannt, in welcher eine mechanische Presse vorgeschlagen wird, bei der unmittelbar an der Welle eines Elektromotors eine Scheibe befestigt ist, welche stirnseitig mit einem Pleuel dadurch in Verbindung steht, daß der obere Pleuelkopf nach Art eines Kugelgelenks exzentrisch in der Scheibe befestigt ist. Das untere Ende des Pleuels ist ebenfalls über ein Kugelgelenk mit einem Schubkorper und damit mit einem Stößel verknüpft. Bei derartigen Vorrichtungen müssen sämtliche auf die Scheibe übertragenen Kräfte und Momente unmittelbar durch die Welle des Motors aufgenommen und weitergeleitet werden, so daß sich die vor allem für Pressen erforderliche Übertragung großer Kräfte verbietet. Die Kugelgelenke unterliegen während des Betriebes hohen Belastungen dadurch, daß sämtliche Kräfte hierdurch übertragen werden und gleichzeitig durch die Rotation der Scheibe und/oder des Pleuels eine Drehbewegung und durch exzentrische Anordnung des Anlenkungspunktes eine Nickbewegung vorgenommen wird, was eine hohe Belastung der Lagerung, einen raschen Verschleiß und niedrige Preßfrequenzen zur Folge hat.

Hiervon ausgehend hat sich die Erfindung die Verbesserung derartiger mechanischer Pressen dahingehend zur Aufgabe gemacht, daß höhere Belastung und Kraftübertragung möglich wird.

Erfindungsgemäß wird diese Aufgabe durch die im Kennzeichen des Hauptanspruches angegebenen Merkmale gelöst.

Die Funktion der erfindungsgemäßen Presse ist wie folgt: Die Welle wird durch einen Antrieb um ihre Achse in Umdrehung versetzt, wodurch sich der stirnseitig und gemäß Voraussetzung versetzte, also exzentrisch verlagerte Zapfen in einer Kreisbahn und in einer Ebene senkrecht zur Welle bewegt. Im allgemeinen nimmt die Achse der Welle nicht die vertikale Lage ein, so daß sich der Zapfen in einer Ebene bewegt, die gegen die Horizontale geneigt ist und die Abweichung als Maß für die Hubhöhe des Stößels gilt. Für den Fall der vertikalen Lage der Wellenachse - der Zapfen bewegt sich dann in einer horizontalen Ebene - wird die Hubhöhe des Stößels zu Null.

Die drehbare Lagerung des Zapfens In der Welle bewirkt, daß die Drehbewegung derselben nicht auf den Pleuel übertragen wird. Der obere Pleuelkopf bewegt sich, wie bereits beschrieben, in einer im allgemeinen gegen die Horizontale geneigten Ebene, wobei die Abweichung hiervon die Hubhöhe und die verbleibenden Bewegungskomponenten eine kreisförmige Bewegung in der Horizontalen, also senkrecht zum Pleuelschaft beschreiben. Durch die drehbare Lagerung der beiden Pleuelköpfe um wenigstens zwei, sich schneidende Achsen und in einer Ebene etwa senkrecht zum Pleuelschaft erreicht man, daß die vergleichsweise komplizierte Bewegung des Zapfens in eine Auf- und Abwärtsbewegung des Stößels übersetzt wird. Die in der angegebenen Weise drehbare Lagerung der Pleuelköpfe läßt sich dadurch realisieren, daß diese mit einem Kreuzgelenk oder einem Kardangelenk in Verbindung stehen, das seinerseits entweder mit dem Zapfen (oberer Pleuelkopf) oder mit dem Stößel (unterer Pleuelkopf) verknüpft ist.

Die bauliche Gestaltung des Pressenständers, -gestells oder -rahmens erfolgt in der üblichen, an sich bekannten Weise. Ebenso kann, wie in den meisten Fällen, auf der Unterseite des Stößels eine Stößelplatte angebracht sein.

Die mit der Erfindung erreichbaren Vorteile sind vielfältig: Einer der wesentlichen Vorzüge besteht darin, daß die während des Preßvorganges auf die Welle ausgeübten Kräfte nicht wie bisher allein in radialer Richtung sondern auch zu einem erheblichen Teil, der abhängt und bestimmt wird durch die Neigung der Welle gegen die Vertikale, auch in axialer Richtung erfolgt. In diesem Zusammenhang ist von Bedeutung, daß für das Arbeiten der Presse eine Hubgröße ungleich Null erforderlich ist, die nur dadurch verwirklicht werden kann, daß das Joch verschwenkt ist, daß also die Welle gegen die Horizontale geneigt ist, mit der Folge, daß die Welle erhebliche Kräfte in axialer Richtung aufnimmt.

Der tiefere Grund für die wesentlich größere Belastbarkeit der erfindungsgemäßen Presse ist darin zu sehen, daß axial auf die Welle wirkende Kräfte weitaus besser aufgenommen und kompensiert werden können, wohingegen radiale Kräfte durch die vergleichsweise empfindlichen und wenig beanspruchbaren Lager aufzunehmen sind. Es ergibt sich somit, daß die Belastbarkeit um so höher ist, je größer der Hub des Stößels. Weitere Vorteile sind darin zu sehen, daß eine derartige Presse vergleichsweise klein und kompakt gebaut werden kann. Schließlich ist noch als Vorteil anzusehen, daß der Erfindungsgedanke insbesondere auch für Maschinen hoher Preßfrequenzen geeignet ist.

In einer weiteren Ausführungsform ist das Joch verschwenkbar und die Schwenkachse verläuft durch die Drehachse des oberen Pleuelkopfes, wenn sich dieser während der Rotation der Welle in seinem tiefsten Punkt befindet. Auf Grund dieser Lagerung bewegen sich Zapfen und oberer Pleuelkopf in Ebenen, die mehr oder weniger gegen die Horizontale geneigt sind, wobei die Abweichungen hiervon die Hubhöhe des Stößels bestimmen. Für den Spezialfall vertikaler Wellenachse, bei der sich oberer Pleuelkopf sowie Zapfen in einer horizontalen Ebene bewegen, wird die Hubhöhe des Stößels zu Null. Entscheidend ist, daß die Schwenkachse so durch das Joch gelegt ist, daß sie mit der Drehachse des oberen Pleulkopfes zusammenfällt, sofern dieser bei seiner in einer Ebene um die Wellenachse erfolgenden Bewegung seinen tiefsten d. h. Werkstücknächsten Punkt einnimmt. In dieser Position befindet sich der Stößel in seinem unteren Umkehrpunkt. Der entscheidende Vorteil dieser Anordnung besteht darin, daß bei Verschwenken des Joches in jeder Position trotz Änderung der Hubhöhe der untere Umkehrpunkt des Stößels erhalten bleibt. Selbstverständlich ändert sich dann der obere Umkehrpunkt. Würde die Achse an einer anderen Stelle des Joches verlaufen, hätte eine Schwenkbewegung eine Verschiebung nicht nur des oberen sondern auch des unteren Umkehrpunktes zur Folge, so daß der Stößel entweder auf das Werkzeug auffahren oder dieses aber gar nicht erreichen würde. Stets wäre zwingend erforderlich, daß entweder das Joch oder der Pressentisch vermittels zusätzlicher Verstelleinrichtungen so in der Vertikalen verschoben werden müßte, daß diese Abweichungen ausgeglichen werden könnten. Bei der erfindungsgemäßen Anordnung der Schwenkachse erübrigen sich deshalb in vorteilhafter Weise derartige zusätzliche Verstelleinrichtungen. Insbesondere bei im unteren Bereich des Umkehrpunktes befindlichem Stößel werden über den oberen Pleuelkopf maximale Kräfte auf das Joch ausgeübt, die ein Kippmoment erzeugen, sofern die Schwenkachse des Joches nicht in der angegebenen Weise verläuft. Im erfindungsgemäßen Fall wirken diese Kräfte auf die Schwenkachse zentral, so daß in vorteilhafter Weise keine Kippmomente auftreten können.

In einer bevorzugten Ausführungsform ist vorgeschlagen, eine oder beide Pleuelköpfe als Kugel auszubilden und in einer Kugelpfanne zu lagern. Mit anderen Worten: Der Pleuel ist mit dem Stößel und/oder der Welle über Kugelgelenke verbunden. Diese ermöglichen wesentlich größere Kräfte vom Stößel auf den Pleuel und von diesem wieder auf Zapfen bzw. Welle bzw. Joch zu übertragen. Daneben besteht ein weiterer Vorteil darin, daß ein Kugelgelenk gegenüber Kreuzgelenken einen zusätzlichen Freiheitsgrad, nähmlich den der Drehung des Pleuels um seine Längsachse, gestattet. Aus Gründen der Einfachheit des Aufbaues wird man den Zapfen zur Aufnahme des oberen Pleuelkopfes als Kugelpfanne und den Stößel gleichzeitig als Kugelpfanne für den unteren Pleuelkopf ausbilden. Für die Beurteilung der erfinderischen Leistung dieses Gedankens ist entscheidend, daß gemeinhin die Auffassung vertreten wird, daß bei einer nur geringen Bewegung und Verdrehung des Kugelkopfes gegen die Kugelpfanne sehr große Reibungskräfte auftreten würden, die einen Einsatz wie im vorliegenden Fall, bei dem die Kugelpfanne sich zwar relativ zur Welle, aber überhaupt nicht oder nur geringfügig relativ zum Kugelkopf bewegt, verbieten. Desweiteren wäre zu erwarten, daß aufgrund der Schwenk- und rotierenden Bewegungen des Pleuels bzw. des zugehörigen Kugelkopfes ein Verschleiß im Bereich der zughörigen Kugelpfanne von nicht zu vertretenden Ausmaße auftreten würden. Wie eingehende Überlegungen zeigen, sind diese Auffassungen nicht gerechtfertigt und es läßt sich mit vorliegender Konstruktion ein Höchstmaß an Kraftübertragung und -aufnahme bei gleichzeitig hoher Lebensdauer erreichen.

Insbesondere bei Stößel großer Fläche empfiehlt sich die Anbringung mehrerer, zueinander stets paralleler Pleuel, die in Reihe oder flächig, bei Vierpunktmaschinen vorzugsweise quadratisch angeordnet sind. Auch hier ist jeder obere Pleuelkopf in einem Zapfen und dieser wiederum an der Stirnseite einer Welle gelagert, wobei in dieser Ausführungsform die einzelnen Wellen miteinander, z. B. über Zahnradgetriebe, in Verbindung stehen.

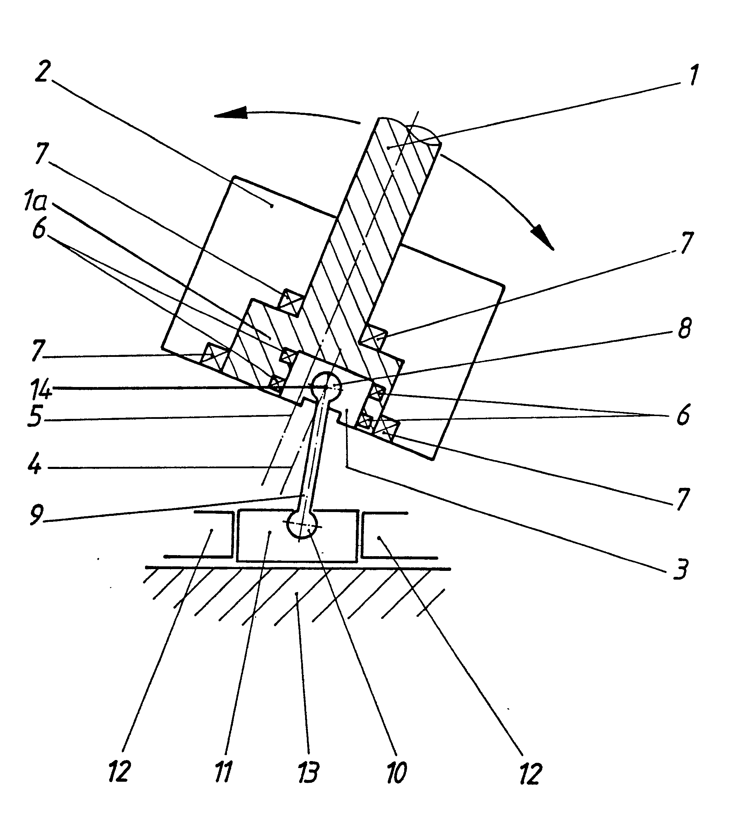

Weitere Einzelheiten, Merkmale und Vorteile der Erfindung lassen sich dem nachfolgenden Beschreibungsteil entnehmen, in dem ein Ausführungsbeispiel der Erfindung anhand der Zeichnung näher erläutert wird. Sie zeigt eine Prinzipskizze der erfindungsgemäßen Presse in Seitenansicht.

In der Zeichnung ist der wesentliche Teil der erfindungsgemäßen Presse widergegeben. Sie zeigt ein unteres Ende einer Welle 1, die zur besseren Unterscheidung von den übrigen Teilen schraffiert dargestellt ist. Diese ist an ihrem oberen, nicht gezeigten Ende mit einem Antrieb koppelbar. Die Welle 1 ist in einem Joch 2 drehbar gelagert und sie weist auf ihrer Stirnseite eine nach innen weisende hohlzylindrische Vertiefung auf, in der ein als Kugelpfanne ausgebildeter Zapfen 3 drehbar angeordnet ist, dessen Drehachse 4, die gleichzeitig Symmetrieachse des Hohlzylinders ist, parallel zur Drehachse 5 der Welle 1, jedoch versetzt hierzu, also exzentrisch, verläuft. Bei einer Drehung der Welle 1 beschreibt der Zapfen 3 eine Kreisbewegung um die Drehachse 5 und zwar in einer Ebene, die senkrecht zu dieser Drehachse 5 der Welle 1 verläuft. Da der Zapfen 3 über Lager 6 mit der Welle 1 in Verbindung steht, kann dessen Position bei einer Umdrehung der Welle 1, abgesehen von einer Verschiebung, im übrigen jedoch raumfest bleiben, d, h. daß der Zapfen 3 nicht zwingend eine Rotation um seine Achse 4 mitmachen muß.

Gleichermaßen kann das Joch 2 aufgrund der Lager 7 auch bei Rotation der Welle 1 raumfest gehalten werden.

Bei einer Bewegung des Zapfens 3 um die Achse 5 der Welle 1 wird der darin befindliche Pleuelkopf 8 mitgeführt und über den Pleuel 9 auch der untere Pleuelkopf 10 entsprechend in Bewegung gesetzt. Dieser ist über eine Kugelpfanne mit einem Stößel 11 verbunden, der zwischen Führungen 12 auf- und abgleitet. Auf der Unterseite ist eine Stößelplatte oder ein Pressentisch 13 angeordnet

Bei der oberen bereits beschriebenen Kreisbewegung des Zapfens 3 um die Drehachse 5 der Welle 1 bewegt sich der obere Pleuelkopf 8 aufgrund der gegen die Vertikale geneigten Achse 5 nach oben, so daß durch Vermittlung des Pleuels 9 auch der untere Pleuelkopf 10 und der damit in Verbindung stehende Stößel 11 nach oben bewegt wird. Die darüber hinaus stattfindenden Schwenkbewegungen des Pleuels 9 einmal gegenüber dem als Kugelpfanne ausgebildeten Zapfen 3 und andererseits gegenüber dem Stößel 11 werden durch die auf diese Weise erzeugten Kugelgelenke ausgeglichen. Es verbleibt, daß bei einem einmaligen Umlauf des oberen Pleuelkopfes 8 um die Drehachse 5 der Stößel 11 eine einzige Auf- und Abwärtsbewegung vollführt. Die Drehzahl der Welle 1 bestimmt unmittelbar die Hubzahl des Stößels 11. Die Höhe des Hubes läßt sich durch Verschwenken des Joches 2 und demzufolge auch der Welle 1 beeinflußen. Sie wird beispielsweise zu Null, wenn sich die Welle 1 genau in der Vertikalen befindet, da in einem solchen Fall die vom oberen Pleuelkopf 8 durchlaufene Ebene in der Horizontalen, genauer gesagt Parallel zum Pressentisch 13 verläuft in bevorzugter Weise verläuft die Schwenkachse 14 des Joches 2 in der Drehachse des oberen Pleuelkopfes 8, wenn sich dieser während der Rotation der Welle 1 in seinem tiefsten Punkt befindet. Dann nämlich bleibt der untere Umkehrpunkt des Stößels auch bei einer Veränderung der Hubhöhe stets erhalten, so daß zur Vermeidung des Auffahrens des Werkzeuges keine Verstelleinrichtungen für das Joch 2 bzw. den Pressentisch 13 vorgesehen werden müssen.

Einer der wesentlichen Vorteile vorliegender Erfindung besteht darin, daß während des Preßvorganges die vom Werkstück ausgeübten und über den Pleuel 9 auf die Welle 1 übertragenden Kräfte nicht nur radial sondern zu einem gewissen Teil auch in axialer Richtung einwirken, wobei letztere über das Joch 2 sehr unproblematisch aufgenommen und kompensiert werden können. Im Ergebnis erhält man eine wesentlich größere Belastbarkeit bei gleichzeit kompaktem Aufbau und stufenloser Einstellbarkeit der Hubhöhe des Stößels 11.

**Patentansprüche**

1. Mechanische Presse mit einer an einen Antrieb gekoppelten Welle (1), die an ihrem, dem Antrieb gegenüberliegenden Ende in einem Joch (2) gelagert und teilweise als Scheibe (1a) geformt ist, und mit einem Pleuel (9), dessen unterer Pleuelkopf (10) mit einem Stößel (11) drehbar in Verbindung steht, der geführt und relativ zum Pressentisch (13) bewegbar ist, und dessen oberer Pleuelkopf (8) stirnseitig und exzentrisch drehbar mit der Scheibe (1a) gekoppelt ist, wobei die beiden Pleuelköpfe um jeweils wenigstens zwei, sich schneidende und in einer Ebene etwa senkrecht zum Pleuelschaft verlaufende Achsen drehbar sind, dadurch gekennzeichnet, daß die Scheibe (1a) und die Welle (1) im Joch (2) gelagert sind und daß der obere Pleuelkopf (8) mit einem drehbar im Teil (1a) gelagerten Zapfen (3) verbunden ist.

2. Presse nach Anspruch 1, dadurch gekennzeichnet, daß das Joch (2) verschwenkbar ist und die Schwenkachse (14) durch die Drehachse des oberen Pleuelkopfes (8) verläuft, wenn sich dieser während der Rotation der Welle (1) in seinem tiefsten Punkt befindet.

3. Presse nach Anspruch 1 oder 2, dadurch gekennzeichnet, daß einer oder beide Pleuelköpfe (8, 10) als Kugel ausgebildet und in einer Kugelpfanne gelagert ist/sind.

4. Presse nach einem der Ansprüche 1 bis 3, dadurch gekennzeichnet, daß zwei oder mehr, stets parallel zueinander verlaufende Pleuel (9), die in Reihe oder flächig, insbesondere quadratisch einander zugeordnet sind und die zugehörigen Wellen (1) untereinander antriebsmäßig in Verbindung stehen.

5. Presse nach Anspruch 4, gekennzeichnet durch ein Zahnradgetriebe als Verbindung der Wellen (1).

**Claims**

1. Mechanical press comprising a shaft 1 connected to a drive which at its end opposite to said drive is mounted in a yoke (2) and is partially shaped as a disk (1a) and comprising a connecting rod (9), whose bottom end (10), is in rotatable connection with a tappet (11), which is guided and moveable relative to the press platen (11), and, whose top end (8) is connected at its front and eccentrically rotatable to said disk (1a), whereby the two connecting rod ends are rotable around at least two, mutually intersecting, axes in a plane approximately perpendicular to shaft of said connecting rod, wherein said disk (1a) and said shaft (1) are mounted in said yoke (2) and said top connecting red end (8) is connected to a pivot (3) rotatably mounted in part (1a).

2. Press according to claim 1 wherein said yoke (2) is swivellable and the axis of swivel (14) passes through the axis of rotation of said top connecting rod end (4) when this is located at its lowest point during the rotation of said shaft (1).

3. Press according to claims 1 or 2 wherein one or both connecting rod ends (8, 10) are formed as balls and mounted in ball cups.

4. Press according to one of claims 1 to 3 wherein two or more connecting rods (9) travelling constantly parallel to each other are disposed in a row or planar arrangement, especially in a square pattern and associated shafts (1) are drivably connected together.

5. Press according to claim 4 wherein a gear wheel forms the connection of said shafts (1).

**Revendications**

1. Presse mécanique avec un arbre (1) relié à une motorisation, l'arbre étant logé du côté opposé à la motorisation dans un joug (2) et étant en partie formé en plateau (1a) et avec une bielle (9) dont la tête inférieure (10) est liée a un poincon (11) de facon a pouvoir être tournée, le poincon étant guidé et étant amovible relativement à la table de la presse (13) et la tête de bielle supérieure (8) étant relié au plateau (1a) par la face avant tourne excentriquement, les deux têtes de bielles étant rotatives autour d'au moins deux axes qui se croissent et qui passent dans un plan à peu près perpendiculaire à l'axe de la bielle caractérisé par le fait que le plateau (1a) et l'arbre (1) sont logés dans le joug (2) et que la tête de bielle supérieure (8) est liée au pivot (3) rotativement logé dans la partie (1a).

2. Presse d'après demande 1 caractérisée par le fait que le joug (2) est pivotant et que l'axe pivotant (14) passe par l'axe de rotation de la tête de bielle supérieure (8) quand celle-ci se trouve à son point le plus bas pendant la rotation de l'arbre (1).

3. Presse d'après demandes 1 ou 2 caractérisée par le fait que une ou les deux têtes de bielle (8, 10) sont formées en sphère et logés dans un coussinet sphérique.

4. Presse mécanique d'après une des demandes 1 à 3 caractérisée par le fait qu'une ou plusieurs bielles (9) qui sont toujours parallèles l'une à l'autre et qui sont installées en rangée, en plan surtout en carré et que les arbres (1) correspondants sont liés l'un à l'autre par l'intermédiaire d'une motorisation.

5. Presse mécanique d'après demande 4 caractérisée par le fait que les arbres (1) sont liés par un engrenage.